(19) Europäisches Patentamt
European Patent Office
Office européen des brevets

(11) **EP 3 363 631 A2**

(12) **EUROPÄISCHE PATENTANMELDUNG**

(43) Veröffentlichungstag:
**22.08.2018   Patentblatt 2018/34**

(21) Anmeldenummer: **18157008.6**

(22) Anmeldetag: **15.02.2018**

(51) Int Cl.:
**B32B 18/00** (2006.01)   **B28B 13/02** (2006.01)
**B30B 15/30** (2006.01)   **A61C 13/09** (2006.01)
**G01N 9/02** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(30) Priorität: **15.02.2017   DE 102017202417**

(71) Anmelder: **Dental Direkt GmbH**
**32139 Spenge (DE)**

(72) Erfinder:
• **GREITENS, Uwe**
**32139 Spenge (DE)**
• **KERRES, Anne**
**32139 Spenge (DE)**

(74) Vertreter: **Knoop, Philipp**
**VKK Patentanwälte**
**An der Alster 84**
**20099 Hamburg (DE)**

(54) **FORMKÖRPER UND VERFAHREN SOWIE VORRICHTUNG ZU DESSEN HERSTELLUNG**

(57)     Um ein Verfahren zur Herstellung eines mehrschichtigen Formkörpers (28, 38, 39) für die Weiterverarbeitung zu einer Zahnrestauration und einen nach dem Verfahren herstellbaren mehrschichtigen Formkörper (28, 38, 39) und eine Vorrichtung (1) zum Einfüllen von Material (6, 7, 8, 9, 10) in eine Form (2, 3, 4) zur Herstellung eines mehrschichtigen Formkörpers (28, 38, 39) für die Weiterverarbeitung zu einer Zahnrestauration mit einer Füllvorrichtung (5) anzugeben, welche Zahnrestaurationen mit reproduzierbaren Schichten, fließendem Schichtübergang und Reproduzierbarkeit des Formkörpers im Ganzen bereitstellen, wird vorgeschlagen, dass ein Streumaß gebildet und mit einem Grenzwert verglichen wird bzw. dass der Füllstand einer oder mehrerer Kammer(n) (11, 12, 13, 14, 15) der Füllvorrichtung (5) zur jeweiligen Bevorratung mindestens eines weiteren Materials (6, 7, 8, 9, 10) kontrolliert und auf einem Soll-Füllstand, welcher mit Hilfe der Schüttdichte berechnet werden kann, gehalten wird.

Fig. 1

EP 3 363 631 A2

**Beschreibung**

Die vorliegende Erfindung betrifft ein Verfahren zur Herstellung eines mehrschichtigen Formkörpers für die Weiterverarbeitung zu einer Zahnrestauration, umfassend: Bereitstellen von zwei oder mehr Materialien, aufeinanderfolgendes Einfüllen der Materialien in eine Form zur Bildung aufeinanderfolgender Materialschichten mit jeweils einer Schichtdicke und Verdichten der Materialschichten zu dem Formkörper.

Mit dem Begriff Formkörper ist im Rahmen der vorliegenden Erfindung insbesondere ein aus einer Formgebung hervorgehender Fräsrohling gemeint. Beispiele für eine Zahnrestauration sind im Rahmen der Erfindung künstliche Zähne, Inlays, Onlays, Brücken oder Kronen.

Ferner betrifft die vorliegende Erfindung einen mit dem eingangs genannten Verfahren herstellbaren Formkörper, wobei der Formkörper insbesondere zur Weiterverarbeitung zu einer Zahnrestauration geeignet ist. Die vorliegende Erfindung betrifft schließlich eine Vorrichtung zum Einfüllen von Material in eine Form zur Herstellung eines mehrschichtigen Formkörpers für die Weiterverarbeitung zu einer Zahnrestauration, mit zumindest einer Matrize, welche zumindest eine Matrizenoberfläche und zumindest eine an der Matrizenoberfläche offene Matrizenkavität aufweist, zumindest einem innerhalb der Matrizenkavität senkrecht zu einer Normalen der Matrizenoberfläche verfahrbaren Stempel, und mit mindestens einer Füllvorrichtung, insbesondere einem Füllschuh, mit einer ersten Kammer zur Bevorratung eines ersten Schüttmaterials, wobei die erste Kammer eine in einem ersten Einfüllpositionsbereich auf der Matrizenkavität positionierbare erste Einfüllöffnung zum Einfüllen des ersten Schüttmaterials in die Matrizenkavität zur Bildung einer ersten Materialschicht mit einer ersten Schichtdicke aufweist, und der Füllschuh entsprechend dem ersten Einfüllpositionsbereich auf der Matrizenoberfläche verfahrbar ist.

Bei einem konventionellen Verfahren der eingangs genannten Art werden gemäß dem in der DE 197 14 178 A1 offenbarten Stand der Technik zumindest zwei unterschiedlich gefärbte Ausgangsmaterialien in eine im Wesentlichen die Form des Formkörpers vorgebende Pressmatrize eingefüllt und zum Formkörper gepresst, wobei die Ausgangspulver sukzessive und schichtenförmig in die Pressmatrizen eingefüllt werden und die durch die Ausgangsmaterialien gebildeten Schichten unterschiedlicher oder gleicher Schichtdicke sind.

Die Materialien werden also jeweils bis zu einer bestimmten Schichtdicke aufeinanderfolgend auf beispielsweise einen Stempel aufgetragen und anschließend zu einem Formkörper der eingangs genannten Art gepresst.

Es treten jedoch häufig Defekte wie beispielsweise Verzüge und/oder Risse bei der Weiterbearbeitung des Formkörpers auf, in welchen Fällen die Zahnrestauration mithin unbrauchbar ist.

Eine Vorrichtung der eingangs genannten Art ist aus der DE 197 14 178 A1 bekannt: sie umfasst Füllschuhe zum sukzessiven Befüllen der Matrizen des Presswerkzeugs mit den unterschiedlich gefärbten Ausgangsmaterialien. Je nachdem, welche Farbschicht erzeugt werden soll und je nach Höhe der Befüllung wird der jeweilige Füllschuh an der Trockenpressmaschine angeordnet und in die Matrizen ausgeleert.

Es werden also zur Herstellung eines mehrschichtigen Formkörpers mehrere Füllschuhe benötigt, je nach dem, wie viele unterschiedlich eingefärbte Farbschichten der Formkörper und damit die Zahnrestauration aufweisen soll. Die Anzahl der Füllschuhe nimmt folglich mit der Anzahl der zu erzeugenden Farbschichten zu, was mit einer entsprechenden Steigerung von Verfahrensschritten und damit benötigter Zeit pro Formkörper einhergeht. Weiterhin werden bei der Befüllung der Form weder die Schüttdichte als entscheidender Faktor, noch der Füllstand in der jeweiligen Materialkammer, noch die Dimensionen des Auslasses berücksichtigt, was zu einem unkontrollierten Befüllen der Form und daraus resultierend ungleichmäßigen Schichten hinsichtlich Schichtdicke und -optik (Farbe und Transluzenz) sowie mangelnder Reproduzierbarkeit führt. Dies führt folglich ebenso in der Weiterverarbeitung zur Zahnrestauration zu mangelnder Reproduzierbarkeit bei beispielsweise Farb- sowie Transluzenzverlauf durch beispielsweise schwankende Schichtstärken und/oder undefinierte Schichtvermischungen.

Der vorliegenden Erfindung liegt daher die Aufgabe zu Grunde, ein gattungsgemäßes Verfahren, einen durch das gattungsgemäße Verfahren herstellbaren Formkörper und eine gattungsgemäße Vorrichtung anzugeben, um Zahnrestaurationen mit verbesserter Gleichmäßigkeit und Reproduzierbarkeit der einzelnen Schichten, definiertem fließenden Schichtverlauf sowie Reproduzierbarkeit des Formkörpers im Ganzen bereitzustellen.

Diese Aufgabe wird hinsichtlich des gattungsgemäßen Verfahrens gelöst, indem jedem Material vor Verwendung, insbesondere vor dem Auftragen, mindestens eine Materialprobe entnommen wird, von jeder Materialprobe mindestens eine Schüttdichte gemessen wird, ein Streumaß aus den gemessenen Schüttdichten gebildet wird, das Streumaß mit einem Grenzwert verglichen wird und die Materialien ausgewählt werden, wenn das Streumaß den Grenzwert einhält. Bei dem erfindungsgemäßen Verfahren werden also in vorteilhafter Weise nur solche Materialien ausgewählt, deren gemessene Schüttdichte innerhalb eines bestimmten Toleranzbereiches liegt, nämlich den Grenzwert nicht überschreitet. Mit Vorteil kommen hierfür insbesondere Materialien in Form von Pulvern oder Granulaten oder Mischungen davon in Betracht.

Durch das erfindungsgemäße Verfahren lassen sich mit Vorteil herstellungsbedingte Schwankungen der Schüttdichte bei Materialien, welche bevorzugt aus demselben Material wie beispielsweise einem Material mit Zirconiumdioxidbasis (folgend als Zirkonoxidbasis bezeichnet), einem Metall und/oder einem Kunststoff bestehen, dahingehend ausgleichen, dass die Schüttdichte vor dem Einfüllen der Materialien in beispielsweise eine Matrize gemessen und im Rahmen des erfindungsgemäßen Verfahrens durch Vergleichen mit dem Grenzwert kontrolliert wird, sodass nur solche Materialien zu dem Formkörper gepresst werden, welche eine dem Grenzwert entsprechende möglichst homogene Schüttdichte im Vergleich zueinander aufweisen. Mit einem relativ niedrigen Grenzwert wird durch das erfindungsgemäße Verfahren gewährleistet, dass sich die einzelnen Materialschichten in kontrollierter Weise miteinander an den jeweils zwischen ihnen gebildeten Grenzübergangen vermischen. Hierdurch wird ebenfalls eine Gleichmäßigkeit und Reproduzierbarkeit der Materialschichten sowie ein definierter fließender Schicht- bzw. Farbverlauf gewährleistet im Fall von eingefärbten Materialien gewährleistet.

Ist der Grenzwert kleiner oder gleich 0,5, weist der Formkörper insgesamt überraschenderweise im Wesentlichen gleichmäßigere Schichten hinsichtlich Schichtstärke sowie gleichmäßigere Vermischung von Schichten speziell in einem Schichtgrenzbereich mit Vorteil für die Weiterverarbeitung zu einer Zahnrestauration mit reproduzierbarem Ergebnis auf. Mit einer Reduzierung des Grenzwertes auf 0,4, 0,3, 0,1 oder 0,05 lässt sich im Rahmen der Erfindung ein Formkörper herstellen, dessen Reproduzierbarkeit sich mit der Reduzierung entsprechend erhöht.

Der Grenzwert wird im Rahmen der Erfindung beispielsweise iterativ bestimmt, indem zum Beispiel zwei oder mehr Materialien zu dem Formkörper gepresst werden, welche hinsichtlich der an ihnen gemessenen Schüttdichte ein relativ großes Streumaß aufweisen, um anschließend durch Anschneiden der Formkörper den Schichtverlauf beurteilen zu können. Der ideale Zeitpunkt für die Beurteilung im Prozess ist in Abhängigkeit des verwendeten Materials zu wählen.

So findet insbesondere für auf Zirkoniumdioxid basierende Materialien die Beurteilung des Schichtverlaufes hinsichtlich optischer Gesichtspunkte idealerweise nach einer thermischen Behandlung, wie zum Beispiel einer Sinterung, statt, da erst dann die optischen Eigenschaften bestimmt werden können. Die Beurteilung des Schichtverlaufes hinsichtlich geometrischer Aspekte ist gegebenenfalls bereits in früheren Prozessschritten möglich.

In bevorzugter Ausgestaltung des erfindungsgemäßen Verfahrens wird das Streumaß nach dem Quotienten

$$\frac{\rho_{sch,\max} - \rho_{sch,\min}}{\rho_{sch,mittel}}$$

gebildet, wobei $\rho_{sch,\max}$ eine aus den gemessenen Schüttdichten ermittelte maximale Schüttdichte, $\rho_{sch,\min}$

eine aus den gemessenen Schüttdichten ermittelte minimale Schüttdichte und $\rho_{sch,mittel}$ eine aus den gemessenen Schüttdichten ermittelte mittlere Schüttdichte ist. Im Rahmen der Erfindung wird das Streumaß also beispielsweise aus der größten und kleinsten Schüttdichte gebildet und auf eine mittlere Schüttdichte normiert, welche aus allen gemessenen Schüttdichten gebildet wurde. Zur Bildung der mittleren Schüttdichte kommen hierbei die aus der deskriptiven Statistik bekannten Verfahren in Betracht wie beispielsweise der Median, der arithmetische Mittelwert, der geometrische Mittelwert, der harmonische Mittelwert, der quadratische Mittelwert oder der kubische Mittelwert oder ein sonstiger dem Fachmann bekannter Mittelwert.

Das Streumaß beschreibt im Rahmen der Erfindung folglich in vorteilhafter Weise ein relatives Streumaß einer Verteilung der gemessenen Schüttdichten in Abhängigkeit der Schüttmaterialien, wie beispielsweise einem Material A mit einer Schüttdichte von 6000 kg/m$^3$, einem Material B mit einer Schüttdichte von 6500 kg/m$^3$ und einem Material C mit einer Schüttdichte von 7000 kg/m$^3$, wonach der arithmetische Mittelwert der genannten Schüttdichte 6500 kg/m$^3$ beträgt und das nach dem obigen Quotienten gebildete Streumaß 0,15 beträgt.

Gleichwohl ist die vorliegende Erfindung nicht auf eine Bildung des Streumaßes nach dem vorgenannten Quotienten beschränkt. Beispielsweise kann das Streumaß nach einem beliebigen aus der deskriptiven Statistik bekannten Verfahren gebildet werden, wie beispielsweise eine auf einen Median normierte Standardabweichung. Auch kommt im Rahmen der Erfindung in Betracht, dass die jeweils gemessene maximale und minimale Schüttdichte als statistische Ausreißer betrachtet werden, wonach die entsprechende zweitgrößte und zweitkleinste Schüttdichte zur Berechnung des Quotienten verwendet werden. Folglich kann der Quotient auch mit der drittgrößten und drittkleinsten oder einer beliebigen Schüttdichtepaarung berechnet werden.

Im Rahmen der Erfindung ist es besonders vorteilhaft, wenn die Schüttdichte durch Schütten der der Materialproben entnommener Volumenproben in einen Probenbehälter definierten Volumens gemessen werden. Die Schüttdichten werden also in vorteilhafter Weise dergestalt reproduzierbar gemessen, indem beispielsweise die Materialproben durch einen Trichter in einen Behälter innerhalb eines definierten Zeitrahmens rieseln, bis der Behälter bis zu einer vorgegebenen Markierung gefüllt ist und der Behälter daraufhin gewogen wird.

Weiterhin kann das Verfahren nach der Erfindung dahingehend vorteilhaft ausgestaltet sein, dass die Materialien ein oder mehrere farbgebende Bestandteile zur Beeinflussung der Farbanmutung der Zahnrestauration enthalten. Als Basismaterial kommt beispielsweise ein auf hochreinem Zirkonoxid basierendes Material in Betracht. Das auf Zirkonoxid basierende Material weist dabei geeigneter Weise eine Zugabe eines Stabilisators wie beispielsweise $Y_2O_3$, $CeO_2$, MgO oder CaO auf zur Stabilisierung der tetragonalen und/oder kubischen Hochtemperaturphasen bei Raumtemperatur, bevorzugt $Y_2O_3$. Weitere Bestandteile können beispielsweise $Al_2O_3$ und $HfO_2$ sein, wobei $Al_2O_3$ dabei bis zu 0,5 Ma-% Anteil aufweisen kann. Andere oxidische Bestandteile sind in geringen Mengen ebenfalls möglich. Die Summe der Bestandteile $ZrO_2$, $Y_2O_3$ und $HfO_2$ weist dabei bevorzugt zumindest 99 Ma-% auf, wobei $Y_2O_3$ einen Anteil von 2-10 Ma-%, bevorzugt 4-10 Ma-% je nach gewünschtem Grad der Stabilisierung, und $HfO_2$ einen Anteil von bis zu 5 Ma-% aufweisen sollten. Das beschriebene Material auf Zirkonoxid-Basis lässt sich durch Zugabe von farbgebenden Bestandteilen einfärben. Dabei handelt es sich bevorzugt um Oxide der Elemente der Gruppe der seltenen Erden sowie der Nebengruppen. Besonders bevorzugt handelt es sich um Oxide der folgenden Elemente: Fe, Pr, Cu, Mn, Co, Bi, V, Cr, Er, Nd. Idealerweise handelt es sich um Oxide der Elemente Fe, Er, Co und/oder Mn, wobei Er neben der färbenden Wirkung ebenso als Stabilisator von tetragonaler und/oder kubischer $ZrO_2$-Phase fungieren kann. Unterschiedliche Oxide erzeugen unterschiedliche Farbwirkungen. Durch das Vermischen und Variieren der verschiedenen farbgebenden Bestandteile bzw. der damit eingefärbten Materialien lassen sich so gewünschte Farbwirkungen erzielen um eine natürliche Farbanmutung der Zahnrestauration zu erhalten.

Farben können beispielsweise durch deren L*a*b-Werte als auch durch in der Dentalindustrie gängige Farbschemata wie beispielsweise VITA classical ®, VITA 3D Master ®, beide von der VITA Zahnfabrik H. Rauter GmbH & Co. KG, und Ivoclar Vivadent AG's Chromascop ® definiert werden.

Die Begriffe Farbe/Färbung bzw. eingefärbt beziehen sich im Rahmen der vorliegenden Erfindung sowohl auf die Farbe als solches, als auch auf die Helligkeit sowie Transluzenz, wobei mit zunehmender Farbintensität Helligkeit und Transluzenz abnehmen.

Das erfindungsgemäße Verfahren wird weiter verbessert, wenn ein keramisches Material, bevorzugt basierend auf Zirkonoxid, verwendet wird. Hierbei handelt es sich um ein aus dem Stand der Technik als solches bekanntes und zur Herstellung von Zahnrestaurationen besonders gut geeignetes Material, welches sich unter anderem durch eine hohe Abriebfestigkeit, eine geringe Neigung zur Bildung von Verfärbungen im implantierten Zustand bei einem Patienten und eine relativ hohe Biokompatibilität auszeichnet. Gegenüber beispielsweise Aluminiumoxid weist Zirkonoxid durch die Zugabe eines Stabilisators wie beispielsweise $Y_2O_3$, $CeO_2$, MgO oder CaO, bevorzugt $Y_2O_3$, eine besonders hohe Widerstandsfähigkeit gegenüber Rissbildung und Rissausbreitung auf, sodass es sich hierbei um ein besonders bevorzugtes Material in der Dentalindustrie handelt.

Nach einer besonders bevorzugten Ausführungsform des erfindungsgemäßen Verfahrens wird für zumindest eine der Materialschichten ein Quotient aus einer für den Formkörper angestrebten Gründichte und der zu der Materialschicht zugehörigen gemessenen Schüttdichte gebildet, und zum Bestimmen der zu der Materialschicht zugehörigen Schichtdicke ein Produkt aus dem Quotienten und einer vorgegebenen Endschichtdicke, auf welche die Materialschicht durch das Verdichten reduziert werden soll, gebildet. Folglich wird mit Vorteil für die Herstellung eines Formkörpers mit einer reproduzierbaren Endschichtdicke das Material für jede Materialschicht zu einer aus dem Quotienten und der Endschichtdicke berechneten Füllhöhe in beispielsweise eine Matrize eingefüllt, wobei die Füllhöhe größer als die Endschichtdicke ist. Indem der Quotient auf einer Messung der Schüttdichte basiert, entfällt somit das Risiko, dass herstellungsbedingte Schwankungen des Materials und damit der Schüttdichte zu einer entsprechenden Variation der Endschichtdicke durch das Pressen führen.

Die der Erfindung zu Grunde liegende Aufgabe wird hinsichtlich des Formkörpers dadurch gelöst, dass der Formkörper nach einem Verfahren nach den Ansprüchen 1 bis 9 herstellbar ist. Der erfindungsgemäße Formkörper weist also mit Vorteil für die Weiterverarbeitung zu einer Zahnrestauration in reproduzierbarer Weise aufgetragene Materialschichten aus beispielsweise Zirkonoxid basiertem, eingefärbtem Material unterschiedlicher Farbe auf, um den Farbverlauf eines natürlichen Zahnes zu imitieren.

Die der Erfindung zu Grunde liegende Aufgabe wird hinsichtlich des gesinterten Zahnrestaurationskörpers dadurch gelöst, dass der Zahnrestaurationskörpers durch Sintern eines Formkörpers nach dem Anspruch 11 herstellbar ist, wobei es sich bei dem Formkörper insbesondere um eine Konstruktion handelt, welche mittels CAD/CAM-Technik gefertigt wurde.

Die der Erfindung zu Grunde liegende Aufgabe wird hinsichtlich der Vorrichtung idealerweise durch eine Vorrichtung gelöst, bei der die Füllvorrichtung eine oder mehr Kammer(n) zur jeweiligen Bevorratung mindestens eines weiteren Materials aufweist, wobei die Kammer(n) nach der ersten Kammer ausgestaltet sind und der Füllschuh entsprechend den weiteren Einfüllpositionsbereichen auf der Matrizenoberfläche verfahrbar ist. Die erfindungsgemäße Vorrichtung weist also neben einer ersten Kammer wenigstens eine zweite Kammer auf, wobei beispielsweise jede Kammer mit einem unterschiedlich eingefärbten Material befüllt werden kann. Mit Vorteil für die Herstellung einer relativ hohen Anzahl von Formkörpern bei einer gleichzeitig relativ niedrigen Anzahl von Verfahrensschritten werden also beispielsweise der Anzahl der Kammern entsprechende Materialschichten in eine Matrizenkavität, welche durch schrittweises Herunterfahren des Stempels gebildet wird, aufeinanderfolgend mit einem Verfahrensschritt, nämlich beispielsweise einer die Matrizenkavität überstreichenden Bewegung der Füllvorrichtung von einer Startposition zu einer Endposition entlang der Matrizenoberfläche gebildet.

Indem die Materialien jeweils durch die Kammern voneinander separiert sind, wird zudem in vorteilhafter Weise vermieden, dass sich die Materialien vermischen, wonach Materialschichten mit reproduzierbarer Färbung herstellbar sind.

Bei einer weiteren vorteilhaften Ausgestaltung der erfindungsgemäßen Vorrichtung ist zumindest eine der Einfüllöffnungen in dem Einfüllpositionsbereich in Richtung der Matrizenkavität als konvergenter Kanal ausgestaltet. Mit Vorteil für ein reproduzierbares Befüllen der Form tritt bei der erfindungsgemäßen Vorrichtung das Material aus der Kammer in die Matrizenkavität entsprechend den Abmessungen des Kanals und den Fließeigenschaften des Materials in Zusammenhang mit dem Füllstand der Kammer als ein kontrollierter Massenstrom aus. In vorteilhafter Weise lässt sich hiermit die Einfüllgeschwindigkeit des Materials in die Matrizenkavität verringern, wonach gleichmäßigere Schichten gebildet werden sowie eine definierte Vermischung der Schichten in der Matrizenkavität stattfindet.

Bei einer erfindungsgemäßen Vorrichtung ist es ferner vorteilhaft, wenn die Abmessungen des Kanals jeweils an das Material variierend angepasst sind, sodass zum Beispiel das Material aus jeder Einfüllöffnung mit einer ungefähr gleichen, vorzugsweise minimalen, Einfüllgeschwindigkeit in die Matrizenkavität eintritt. Insbesondere kommt hierbei eine Variation des Kanals in Abhängigkeit der Schüttdichten in Betracht. Die Erfindung ist herbei nicht auf eine Vorrichtung mit einer Füllvorrichtung mit mehreren Kammern, sondern auch auf eine Füllvorrichtung mit nur einer Kammer gerichtet.

Darüber hinaus dient eine an der Einfüllöffnung durch den Kanal gebildete Kante zum Abtragen von Material, welches nach dem Einfüllen aus der Matrizenkavität herausragt, sodass mit Vorteil die Bildung reproduzierbarer Materialschichtdicken bei dieser Ausgestaltung zusätzlich unterstützt wird.

Es ist weiterhin vorteilhaft, wenn bei der erfindungsgemäßen Vorrichtung der Füllvorrichtung an zumindest einer der Einfüllöffnungen ein Dichtelement zum Abdichten eines Spaltes zwischen der Matrizenoberfläche und der Füllvorrichtung aufweist. Hierdurch wird mit Vorteil zur Erzielung eines vorgegebenen Farbverlaufs an dem Formkörper beispielsweise bei einer Bewegung des Füllschuhs vermieden, dass Material von einer der Kammern in eine der anderen Kammern gelangt.

Nach einer besonders bevorzugten Ausgestaltung der erfindungsgemäßen Vorrichtung weist die Füllvorrichtung zumindest eine Absaugvorrichtung zum Absaugen überschüssigen Materials auf der Matrizenoberfläche. Durch die Absaugvorrichtung wird beispielsweise Material aus einem vorhergegangenen Verfahrensschritt, bei dem die Matrizenkavität mit dem Material befüllt wurde und ein Teil des Materials versehentlich auf die Matrizenoberfläche gelangte, von der Matrizenoberfläche abgesaugt, sodass mit Vorteil für die Herstellung der Materialschicht mit einem vorgegebenen Farbverlauf eine Querkontamination der Materialien vermieden wird. Die Absaugvorrichtung kann beispielsweise an einem vorderen und oder einem hinteren Bereich der Füllvorrichtung befestigt sein, wobei der vordere und hintere Bereich durch die Anordnung der Kammern dergestalt definiert ist, dass eine Position der Kammer, welche als erstes entleert wird, den vorderen Bereich definiert, und eine Position der Kammer, welche als letztes entleert wird, den hinteren Bereich definiert.

Bei einer weiteren bevorzugten Ausgestaltung der erfindungsgemäßen Vorrichtung ist vorgesehen, dass in einer von den Einfüllpositionsbereichen entfernten Parkposition eine Auffüllvorrichtung zum Auffüllen der Kammern mit den Materialien mit einer Steuereinheit vorgesehen ist, wobei die Steuereinheit derart programmiert ist, dass für zumindest eine Kammer bei einer Abweichung einer durch die Bevorratung des Schüttmaterials definierten Ist-Füllhöhe von einer vorgegebenen Soll-Füllhöhe die Kammer bis zu einer im Wesentlichen Übereinstimmung zwischen der Soll-Füllhöhe und der Ist-Füllhöhe mit dem Material befüllt wird. Bei der erfindungsgemäßen Vorrichtung werden also nach jedem Entleeren der Kammern, die Kammern mit einer vorgebenen Menge der Materialien befüllt, sodass mit Vorteil für die Herstellung von Formkörpern mit reproduzierbaren Eigenschaften, insbesondere mit Blick auf die Schichtdicke und die Bildung eines Übergangsbereichs zwischen den einzelnen Materialschichten, die Kammern vor dem Entleeren in die Matrizenkavität denselben Pulvereigendruck, also dem in den Kammern durch die Schüttmaterialien erzeugten Druck, aufweisen. Durch einen auf diese Weise kontrollierten Füllstand wird folglich in Kombination mit einer definierten Geschwindigkeit der Füllvorrichtung entlang der Matrizenoberfläche gewährleistet, dass das Schüttmaterial stets in gleicher Weise beim Entleeren der Kammern aus den Einfüllöffnungen ausströmt. Durch die erfindungsgemäße Vorrichtung ist danach der durch das Material in den Kammern aufgebrachte Materialeigendruck wegen der Anpassung der Ist-Füllhöhe an die Soll-Füllhöhe, sprich einer Füllstandskontrolle, nicht höher als für das Befüllen der Matrizenkavität benötigt, wonach die Einfüllgeschwindigkeit entsprechend minimiert wird und somit eine wohldefinierte Vermischung der Materialien in der Matrizenkavität stattfindet. Die Erfindung ist herbei nicht auf eine Vorrichtung mit einer Füllvorrichtung mit mehreren Kammern, sondern auch auf eine Füllvorrichtung mit nur einer Kammer gerichtet.

Vorzugsweise ist die Soll-Füllhöhe aus dem Produkt aus einem Quotienten und einem vorgegebenen Verdichtungsvolumen, auf welches das Material verdichtet werden soll, berechenbar, wobei der Quotient aus einer für den Formkörper angestrebten Gründichte und einer an dem Material gemessenen Schüttdichte gebildet ist. Die Soll-Füllhöhe entspricht folglich ungefähr der Menge des Materials, welche erforderlich ist, um die Materialschicht mit Vorteil für eine reproduzierbare Herstellung des Formkörpers auf eine vorgegebene Endschichtdicke zu reduzieren. An dieser Stelle wird ausdrücklich darauf hingewiesen, dass die Soll-Füllhöhe auf Basis einer an den Materialien jeweils gemessenen Schüttdichte bestimmt wird, sodass mit Vorteil chargenbedingte Schwankungen des Materials und damit der Schüttdichte ausgeglichen werden, sodass bei jedem Befüllen der Matrizenkavität Material in einer solchen Menge in die Matrizenkavität eingefüllt wird, dass die Endschichtdicke der Materialschichten vorgegebene Toleranzen einhält.

Es ist im Rahmen der Erfindung besonders vorteilhaft, wenn der Soll-Füllstand hinsichtlich der Menge des Materials, welche erforderlich ist, um die Materialschicht mit Vorteil für eine reproduzierbare Herstellung des Formkörpers auf eine vorgegebene Endschichtdicke zu reduzieren, geringfügig höher gewählt wird.

Nach einer weiteren bevorzugten Ausgestaltung der erfindungsgemäßen Vorrichtung weist die Auffüllvorrichtung Messmittel zum Messen der Ist-Füllhöhe auf. Mit Vorteil für die Befüllung der Kammern mit einer zum Auftragen der Materialschichten mit einer vorgegebenen Höhe wird die Ist-Füllhöhe zum Beispiel in der Kammer mit optischen, gravimetrischen oder sonstigen Messmitteln oder mit Drucksensoren gemessen, sodass beispielsweise ein entsprechendes Messsignal an der Steuereinheit bereitgestellt wird. Mit Vorteil für die Herstellung reproduzierbarer Formkörper kann nach dieser Ausgestaltung das Auffüllen der Kammern vollautomatisch erfolgen.

Es ist auch vorteilhaft, wenn bei der erfindungsgemäßen Vorrichtung ein Prägestempel zum Prägen eines Musters in zumindest eine der Materialschichten vorgesehen ist, wobei keine Verdichtung der entsprechenden Materialschicht stattfindet und der Prägestempel derart verfahrbar ist, dass der Prägestempel nach dem Einfüllen zumindest eines der Materialien auf die entsprechende Materialschicht gepresst ist und vor dem Einfüllen eines weiteren der Materialien außerhalb der Matrizenkavität angeordnet ist. Indem die Materialschicht ein auf diese Weise erzeugtes Muster aufweist, wird das Ineinanderfließen der Materialien an einer Grenzfläche zwischen zwei benachbarten Materialschichten mit Vorteil für einen kontinuierlichen Farbverlauf entlang der Materialschichten verbessert.

Bei der Vorrichtung nach der Erfindung sind nach einer weiteren vorteilhaften Ausgestaltung Mittel zum Messen der Schüttdichte vorgesehen, wobei die Mittel mindestens eine Vorrichtung beispielsweise einen Trichter zum Überführen eines Anteils der Materialien in einen von den Mitteln umfassten Prüfbehälter eines vorgegebenen Volumens und eine Waage zum Bestimmen eines Gewichts des Prüfbehälters in einem leeren sowie mit den Materialien befüllten Zustand aufweisen.

Schließlich umfasst die erfindungsgemäße Vorrichtung nach noch einer vorteilhaften Ausgestaltung eine Analysevorrichtung zum Analysieren der Materialien vor dem Auffüllen der Kammern mit Mitteln zum Entnehmen einer Materialprobe von jeder der Materialien, Mitteln zum Zuführen der Materialproben zu den Mitteln zum Messen der Schüttdichte, Mitteln zum Bilden eines Streumaßes aus den mit den Mitteln zum Messen der Schüttdichte gemessenen Schüttdichten und zum Vergleichen des Streumaßes mit einem Grenzwert, und Mitteln zur Ausgabe eines Kontrollsignals derart, dass anhand des Kontrollsignals feststellbar ist, ob der Grenzwert eingehalten wird. Mit Vorteil werden also die Materialien vor dem Befüllen der Kammern hinsichtlich ihrer Schüttdichte analysiert, sodass anhand des Kontrollsignals entschieden werden kann, ob eine Streuung der Schüttdichten einen gewissen Toleranzbereich einhält.

Die Erfindung wird in bevorzugten Ausführungsformen unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:

Figur 1:    eine schematische Darstellung der erfindungsgemäßen Vorrichtung nach einer ersten Ausführungsform;

Figur 2:    eine schematische Detaildarstellung der erfindungsgemäßen Vorrichtung nach Figur 1;

Figur 3:    eine schematische Schnittdarstellung eines erfindungsgemäßen mehrschichtigen Formkörpers nach einer ersten Ausführungsform; und

Figur 4:    eine schematische perspektivische Darstellung eines erfindungsgemäßen mehrschichtigen Formkörpers nach einer zweiten Ausführungsform.

Figur 5:    eine schematische perspektivische Darstellung eines erfindungsgemäßen mehrschichtigen Formkörpers nach einer dritten Ausführungsform

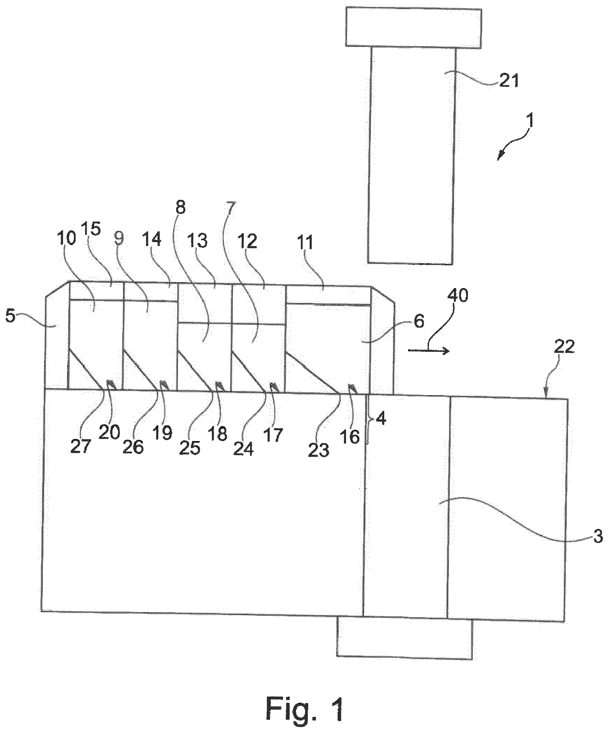

Figur 1 zeigt in einer schematischen Darstellung eine erfindungsgemäße Vorrichtung 1 nach einer ersten Ausführungsform. Die Vorrichtung 1 umfasst eine Matrize 2 mit einem Unterstempel 3. Indem der Unterstempel 3 von einer Oberfläche 22 der Matrize 2 in der Vertikalen nach unten weg bewegt wird, wird in einem Bereich 4 ein Hohlraum gebildet. In den Hohlraum des Bereichs 4 wird durch eine Bewegung einer Füllvorrichtung 5 der Vorrichtung 1 unterschiedlich gefärbtes Material 6, 7, 8, 9 und 10 aus den Kammern 11, 12, 13, 14 und 15 der Füllvorrichtung 5 durch Öffnungen 16, 17, 18, 19 und 20 der Kammern 11, 12, 13, 14 und 15 sukzessive in den Hohlraum des Bereichs 4 entleert, sodass die Materialien 6, 7, 8, 9 und 10 schichtenweise auf den Unterstempel 3 aufgetragen werden. Die Füllvorrichtung 5 wird hierbei durch einen nicht dargestellten Mechanismus entlang der Oberfläche 22 bewegt.

Der Unterstempel 3 fährt zu Beginn eines Verfahrensschritts um einen vorgegebenen Betrag von der Oberfläche 22 weg, um den Hohlraum des Bereichs 4 zur Aufnahme des Materials 6 zu vergrößern. Die Füllvorrichtung 5 fährt dann über den Bereich 4 soweit hinweg, sodass Material aus der Kammer 11 in den Hohlraum des Bereichs 4 fließen und diesen füllen kann. Ist der Hohlraum des Bereichs 4 vollständig gefüllt, kann sich die Füllvorrichtung 5 in Richtung 40 weiterbewegen. Mit einer Kante 23 wird dabei der mit Material 6 gefüllte Bereich 4 auf Höhe der Oberfläche 22 abgezogen.

Der Unterstempel 3 fährt mit dem Verschließen von Kammer 11 durch Oberfläche 22 um einen weiteren vorgegebenen Betrag von der Oberfläche 22 weiter weg, um den Hohlraum des Bereichs 4 zur Aufnahme des Materials 7 zu vergrößern. Die Füllvorrichtung 5 fährt dann über den Bereich 4 soweit hinweg, sodass Material aus Kammer 12 in den Hohlraum des Bereichs 4 fließen kann. Ist der Hohlraum des Bereichs 4 vollständig gefüllt, kann sich die Füllvorrichtung 5 in Richtung 40 weiterbewegen. Mit der Kante 24 wird dabei der mit Material 7 gefüllte Bereich 4 auf Höhe der Oberfläche 22 abgezogen.

Daraufhin fährt mit dem Verschließen von Kammer 12 durch Oberfläche 22 der Unterstempel 3 um einen weiteren vorgegebenen Betrag von der Oberfläche 22 weiter weg, um den Hohlraum des Bereichs 4 zur Aufnahme des Materials 8 zu vergrößern. Die Füllvorrichtung 5 fährt dann über den Bereich 4 soweit hinweg, sodass Material aus Kammer 13 in den Hohlraum des Bereichs 4 fließen kann. Ist der Hohlraum des Bereichs 4 vollständig gefüllt, kann sich die Füllvorrichtung 5 in Richtung 40 weiterbewegen. Mit der Kante 25 wird dabei der mit Material 8 gefüllte Bereich 4 auf Höhe der Oberfläche 22 abgezogen.

Danach fährt mit dem Verschließen von Kammer 13 durch Oberfläche 22 der Unterstempel 3 um einen weiteren vorgegebenen Betrag von der Oberfläche 22 weiter weg, um den Hohlraum des Bereichs 4 zur Aufnahme des Materials 9 zu vergrößern. Die Füllvorrichtung 5 fährt dann über den Bereich 4 soweit hinweg, sodass Material aus Kammer 14 in den Hohlraum des Bereichs 4 fließen kann. Ist der Hohlraum des Bereichs 4 vollständig gefüllt, kann sich die Füllvorrichtung 5 in Richtung 40 weiterbewegen. Mit der Kante 26 wird dabei der mit Material 9 gefüllte Bereich 4 auf Höhe der Oberfläche 22 abgezogen.

Abschließend fährt mit dem Verschließen von Kammer 14 durch Oberfläche 22 der Unterstempel 3 um einen weiteren vorgegebenen Betrag von der Oberfläche 22 weiter weg, um den Hohlraum des Bereichs 4 zur Aufnahme des Materials 10 zu vergrößern. Die Füllvorrichtung 5 fährt dann über den Bereich 4 soweit hinweg, sodass Material aus Kammer 15 in den Hohlraum des Bereichs 4 fließen kann. Ist der Hohlraum des Bereichs 4 vollständig gefüllt, kann sich die Füllvorrichtung 5 in Richtung 40 weiterbewegen. Mit der Kante 27 wird dabei der mit Material 10 gefüllte Bereich 4 auf Höhe der Oberfläche 22 abgezogen.

Nachdem Material aus den Kammern 11, 12, 13, 14 und 15 auf diese Weise in den Bereich 4 gefüllt wurde und die Füllvorrichtung 5 in eine Parkposition mit Auffüllvorrichtung vor der Ausgangsposition fahren kann, fährt der Oberstempel 21 in Richtung der Oberfläche 22 auf den Unterstempel 3 zu, um die in Bereich 4 befindlichen Schichten der Materialien 6, 7, 8, 9 und 10 zu einem Formkörper zu pressen. Anschließend fährt der Unterstempel 3 in die in Figur 1 gezeigte Position zurück, wonach der gepresste Formkörper der Vorrichtung 1 entnommen werden kann.

In der Parkposition wird die Füllvorrichtung 5 zu Beginn eines nächsten Verfahrensschrittes, bei dem die beschriebene Befüllung des Bereiches 4 durch die Kammern 11, 12, 13, 14 und 15 wiederholt wird, mit den Materialien 6, 7, 8, 9 und 10 mithilfe einer nicht dargestellten Auffüllvorrichtung befüllt, wobei eine programmierbare Steuereinheit einen Befüllungsvorgang der Kammern 11, 12, 13, 14 und 15 stoppt, wenn die in der Figur 1 gezeigte Soll-Füllhöhe der Materialien 6, 7, 8, 9 und 10 in den Kammern 11, 12, 13, 14 und 15 erreicht ist, sodass bei jedem Verfahrensschritt ein identischer Pulvereigendruck in den Kammern 11, 12, 13, 14 und 15 vorherrscht. Vor dem ersten Befüllen der Kammern 11, 12, 13, 14 und 15 wird eine Schüttdichte der Materialien 6, 7, 8, 9 und 10 gemessen, insbesondere wird die Schüttdichte an einem von der Füllvorrichtung 5 entfernten Ort gemessen.

Das auf eine aus den gemessenen Schüttdichten ermittelte arithmetische mittlere Schüttdichte normierte Streumaß zwischen einer maximalen und einer minimalen Schüttdichte der Materialien 6, 7, 8, 9 und 10 ist hierbei 0,15 und damit kleiner als 0,5, sodass gleichmäßige und reproduzierbare Schichten erzeugt werden können.

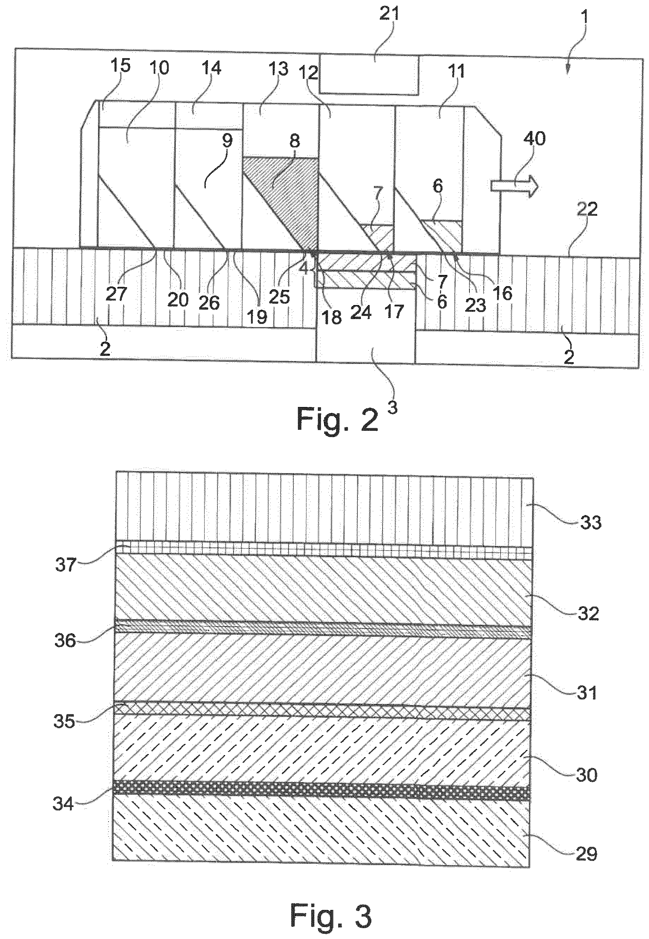

Figur 2 zeigt eine Detaildarstellung der erfindungsgemäßen Vorrichtung 1 nach Figur 1, wobei die Füllvorrichtung 5 in einer von der in Figur 1 gezeigten Ausgangsposition entfernt auf der Oberfläche 22 der Matrize 2 angeordnet ist und die Materialien 6 und 7 bereits in den nunmehr gefüllten Hohlraum des Bereichs 4 aus den Kammern 11 und 12 gefüllt wurden. Die Materialien 6 und 7 bilden auf dem Unterstempel 3 zwei Pulverschichten mit je einer Schichtdicke. Der Quotient aus der Schichtdicke zu einer Endschichtdicke, auf welche die Pulverschichten jeweils durch ein Aufeinanderzubewegen des Oberstempels 21 und des Unterstempels 3 gepresst werden, ist mit dem Quotienten aus der für die Materialien 6 und 7 vorgegebenen Gründichte zu der für die Materialien 6 und 7 gemessenen Schüttdichte identisch, sodass die durch die Materialien 6 und 7 gebildeten Pulverschichten auf vorgegebene Schichtdicken gepresst werden können.

Kanten 23, 24, 25, 26 und 27 der Öffnungen 16, 17, 18, 19 und 20 streichen bei einer Bewegung der Füllvorrichtung 5 in die Richtung 40 beim Befüllen des Bereichs 4 sukzessiv über den gefüllten Hohlraum des Bereichs 4, sodass wie in der Figur 2 am Beispiel der aus dem Material 7 gebildeten Pulverschicht gezeigt, Pulverschichten mit einer relativ glatten Oberfläche gebildet werden.

Figur 3 zeigt eine schematische Schnittdarstellung eines mehrschichtigen Formkörpers 28 nach der vorliegenden Erfindung. Der Formkörper 28 wurde mithilfe der in den Figuren 1 und 2 gezeigten erfindungsgemäßen Vorrichtung 1 hergestellt. Der Formkörper 28 weist Schichten 29, 30, 31, 32 und 33 aus unterschiedlich gefärbten auf Zirkonoxid basierenden Materialien auf, (wobei die Farbe der Schicht 29 dabei die höchste Intensität aufweist und die Intensität der Farben der darauffolgenden Schichten 30, 31, 32 und 33 sukzessive abnimmt,) wobei eine natürliche Farbgebung erzielt wird und die Farben der Schichten, insbesondere Schicht 29, bevorzugt in Abstufungen auf einem der Farbsysteme der Dentalindustrie basieren, bevorzugt VITA classical ®.

Zwischen den Schichten 29, 30, 31, 32 und 33 weist der Formkörper 28 ferner aus einer Mischung zwischen den jeweils benachbarten Schichten 29, 30, 31, 32 und 33 gebildete Zwischenschichten 34, 35, 36 und 37 auf. Von der Schicht 29 bis zu der Schicht 33 nimmt die Farbintensität der Schichten ab, indem die Konzentration an farbgebenden Bestandteilen in der Schicht 29 bis zu in der Schicht 33 entsprechend abnimmt. Daraus resultierend nimmt die Transluzenz und die Helligkeit des Formkörpers von der Schicht 29 bis zu der Schicht 33 zu.

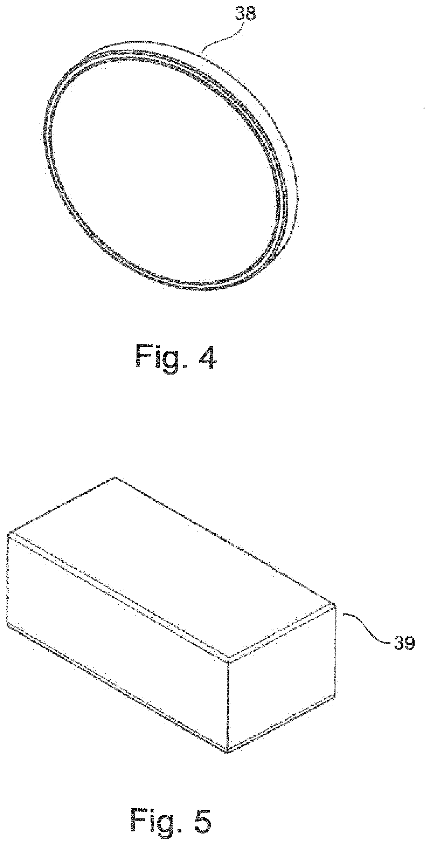

Figur 4 zeigt eine schematische perspektivische Darstellung eines erfindungsgemäßen mehrschichtigen Formkörpers 38 nach einer zweiten Ausführungsform. Der Formkörper 38 ist scheibenförmig und wurde mit der in den Figuren 1 und gezeigten Vorrichtung hergestellt. Der Formkörper 38 weist mehrere Schichten aus eingefärbten, auf Zirkonoxid basierenden Materialien analog zu dem Formkörper 28 aus Figur 3 auf, wobei die Materialien einen geringen Anteil an organischen Presshilfsmitteln enthalten. Nach dem Pressen wird der Formkörper 38 isostatisch nachverdichtet, was sich positiv auf die mechanische Integrität des Formkörpers 38 auswirkt. Nach dem isostatischen Nachverdichten wird der Formkörper 38 in einem nicht dargestellten Ofen einer thermischen Behandlung zwischen 800-1200°C, bevorzugt 900-1100°C, unterzogen, um die Anteile organischer Presshilfsmittel zu entfernen und den Formkörper 38 vorzusintern. Nach der thermischen Behandlung weist der Formkörper 38 eine hinreichende Härte und Dichte auf für die Weiterverarbeitung zur dentalen Zahnrestauration. Der Durchmesser des Formkörpers 38 beträgt 98-99mm bei einer Scheibendicke von etwa 10 mm bis etwa 30mm, je nach Ausführungsform.

Aus dem Formkörper 38 können mit CAD-CAM-Technologien dentale Zahnrestaurationen gefräst werden. Die Zahnrestaurationen werden danach bei einer Temperatur im Bereich von 1400°C bis 1600°C gesintert. Besonders bevorzugt ist eine Sintertemperatur von 1450°C.

Figur 5 zeigt eine schematische perspektische Darstellung nach einer dritten Ausführungsform des erfindungsgemäßen Formkörpers. Der Formkörper 39 ist blockförmig und wurde mit der in den Figuren 1 und Figur 2 gezeigten erfindungsgemäßen Vorrichtung hergestellt.

Blockförmige Formkörper werden einer Wärmebehandlung wie bei Formkörper 38 bereits beschrieben unterzogen und weisen danach eine Kantenlänge von etwa 85 bis 20mm auf, je nach Ausführungsform. Nach der Wärmebehandlung werden blockförmige Formkörper mit einer nicht dargestellten Halterung für diverse Fräs- sowie Schleifsysteme versehen.

BEZUGSZEICHENLISTE

| 1 | Vorrichtung |
|---|---|
| 2 | Matrize |
| 3 | Unterstempel |
| 4 | Bereich |
| 5 | Füllvorrichtung |
| 6 | Material |
| 7 | Material |
| 8 | Material |
| 9 | Material |
| 10 | Material |
| 11 | Kammer |
| 12 | Kammer |
| 13 | Kammer |
| 14 | Kammer |
| 15 | Kammer |
| 16 | Öffnung |
| 17 | Öffnung |
| 18 | Öffnung |
| 19 | Öffnung |
| 20 | Öffnung |
| 21 | Oberstempel |
| 22 | Oberfläche |
| 23 | Kante |
| 24 | Kante |
| 25 | Kante |
| 26 | Kante |
| 27 | Kante |
| 28 | Formkörper |
| 29 | Schicht |
| 30 | Schicht |
| 31 | Schicht |
| 32 | Schicht |
| 33 | Schicht |
| 34 | Zwischenschicht |
| 35 | Zwischenschicht |
| 36 | Zwischenschicht |
| 37 | Zwischenschicht |
| 38 | Formkörper |
| 39 | Formkörper |
| 40 | Richtung |

**Patentansprüche**

1. Verfahren zur Herstellung eines mehrschichtigen Formkörpers (28, 38, 39) für die Weiterverarbeitung zu einer Zahnrestauration, umfassend:

- Bereitstellen von zwei oder mehr Materialien (6, 7, 8, 9, 10);
- aufeinanderfolgendes Einfüllen der Materialien (6, 7, 8, 9, 10) in eine Form zur Bildung aufeinanderfolgender Materialschichten mit jeweils einer Schichtdicke; und
- Verdichten der Materialschichten zu dem Formkörper (28, 38, 39); **dadurch gekennzeichnet,dass**
- jedem Material (6, 7, 8, 9, 10) vor dem Einfüllen mindestens eine Materialprobe entnommen wird;
- von jeder Materialprobe eine Schüttdichte gemessen wird;
- ein Streumaß aus den gemessenen Schüttdichten gebildet wird;
- das Streumaß mit einem Grenzwert verglichen wird; und
- die Materialien (6, 7, 8, 9, 10) ausgewählt werden, wenn das Streumaß den Grenzwert einhält.

2. Verfahren nach einem der vorhergehenden Ansprüche , **da-durch gekennzeichnet,dass** das Streumaß nach dem Quotienten

$$\frac{\rho_{sch,\max} - \rho_{sch,\min}}{\rho_{sch,mittel}}$$

gebildet wird, wobei $\rho_{sch,max}$ eine aus den gemessenen Schüttdichten ermittelte maximale Schüttdichte, $\rho_{sch,min}$ eine aus den gemessenen Schüttdichten ermittelte minimale Schüttdichte und $\rho_{sch,mittel}$ eine aus den gemessenen Schüttdichten ermittelte mittlere Schüttdichte ist, wobei vorzugsweise der Grenzwert kleiner oder gleich 0,5 ist.

3. Verfahren nach einem der vorhergehenden Ansprüche, **dadurch gekennzeichnet, dass** die Schüttdichten durch Schütten der Materialproben entnommener Volumenproben in einen Probebehälter definierten Volumens gemessen werden.

4. Verfahren nach einem der vorhergehenden Ansprüche, **dadurch gekennzeichnet,dass** dieMaterialien(6,7,8,9,10) farbgebende Bestandteile zur Beeinflussung der Farbanmutung der Zahnrestauration enthalten.

5. Verfahren nach einem der vorhergehenden Ansprüche, **dadurch gekenzeichnet, dass** das Basismaterial ein keramisches Material ist, welches insbesondere zumindest auf $ZrO_2$ basiert.

6. Verfahren nach einem der vorhergehenden Ansprüche, **dadurch gekennzeichnet, dass** wenigstens einer der farbgebenden Bestandteile eine Verbindung, bevorzugt ein Oxid, eines Elementes aus der Gruppe der seltenen Erden und/oder der Nebengruppen des Periodensystem der chemischen Elemente ist.

7. Verfahren nach einem der vorgehenden Ansprüche, **dadurch gekennzeichnet,dass** es sich bei einem der farbgebenden Bestandteile um eine Verbindung, bevorzugt ein Oxid mit einem oder mehreren der folgenden Elemente handelt: Fe, Pr, Cu, Mn, Co, Bi, V, Cr, Er und/oder Nd.

8. Verfahren nach einem der vorhergehenden Ansprüche, **dadurch gekenntzeichnet, dass** für zumindest eine der Materialschichten ein Quotient aus einer für den Formkörper (28, 38, 39) angestrebten Gründichte und der zu der Materialschicht zugehörigen Schüttdichte gebildet wird; und
zum Bestimmen der zu der Materialschicht zugehörigen Schichtdicke ein Produkt aus dem Quotienten und einer vorgegebenen Zielschichtdicke, auf welche die Materialschicht durch das Pressen reduziert werden soll, gebildet wird.

9. Formkörper (28, 38, 39), herstellbar nach einem Verfahren gemäß einem der Ansprüche 1 bis 8.

10. Gesinterter Zahnrestaurationskörper, herstellbar durch Sintern eines Formkörpers (28, 38, 39) nach dem Anspruch 9, wobei es sich bei dem Formkörper insbesondere um eine Konstruktion handelt, welche mittels CAD/CAM-Technik gefertigt wurde.

11. Vorrichtung (1) zum Einfüllen von Material (6, 7, 8, 9, 10) in eine Form (2, 3, 4) zur Herstellung eines mehrschichtigen Formkörpers (28, 38, 39) für die Weiterverarbeitung zu einer Zahnrestauration, mit zumindest einer Matrize (2), welche zumindest eine Matrizenoberfläche (22) und zumindest eine an der Matrizenoberfläche offene Matrizenkavität (4) aufweist;
zumindest einem innerhalb der Matrizenkavität (4) senkrecht zu einer Normalen der Matrizenoberfläche verfahrbaren Stempel (3); und mindestens einer Füllvorrichtung (5), insbesondere einem Füllschuh, mit einer ersten Kammer (11, 12, 13, 14, 15) zur Bevorratung eines ersten Materials (6, 7, 8, 9, 10);
wobei die erste Kammer (11, 12, 13, 14, 15) eine in einem ersten Einfüllpositionsbereich auf der Matrizenkavität (4) positionierbare erste Einfüllöffnung (16, 17, 18, 19, 20) zum Einfüllen des ersten Materials (6, 7, 8, 9, 10) in die Matrizenkavität (4) zur Bildung einer ersten Materialschicht mit einer ersten Schichtdicke aufweist,
und die Füllvorrichtung (5) entsprechend dem ersten Einfüllpositionsbereich auf der Matrizenoberfläche (22) verfahrbar ist; **dadurch gekennzeichnet, dass** die Füllvorrichtung (5) eine oder mehr Kammer(n) (11, 12, 13, 14, 15) zur jeweiligen Bevorratung mindestens eines weiteren Materials (7, 8, 9, 10) aufweist, wobei die Kammer(n) (11, 12, 13, 14, 15) nach der ersten Kammer (11, 12, 13, 14, 15) ausgestaltet sind und die Füllvorrichtung (5) entsprechend den weiteren Einfüllpositionsbereichen auf der Matrizenoberfläche (22) verfahrbar ist.

12. Vorrichtung (1) nach einem der vorhergehenden Ansprüche, **dadu rch gekennzeichnet, dass** in einer von den Einfüllpositionsbereichen entfernten Parkposition eine Auffüllvorrichtung zum Auffüllen der Kammern (11, 12, 13, 14, 15) mit den Materialien mit einer Steuereinheit vorgesehen ist, wobei die Steuereinheit derart programmiert ist, dass für zumindest eine Kammer (11, 12, 13, 14, 15) bei einer Abweichung einer durch die Bevorratung des Materials definierten Ist-Füllhöhe von einer vorgegebenen Soll-Füllhöhe die Kammer (11, 12, 13, 14, 15) bis zu einer im Wesentlichen Übereinstimmung zwischen der Soll-Füllhöhe und der Ist-Füllhöhe mit dem Material befüllt wird.

13. Vorrichtung (1) nach einem der vorhergehenden Ansprüche, da-**durch gekennzeichnet, dass** die Auffüllvorrichtung Messmittel zum Messen der Ist-Füllhöhe aufweist.

14. Vorrichtung (1) nach einem der vorhergehenden Ansprüche, **da-durch gekennzeichnet, dass** ein Prägestempel zum Prägen eines Musters in zumindest eine der Materialschichten vorgesehen ist, wobei im Wesentlichen keine Verdichtung der entsprechenden Materialschicht stattfindet und der Prägestempel derart verfahrbar ist, dass der Prägestempel nach dem Einfüllen zumindest eines der Schüttmaterialien auf die entsprechende Materialschicht gepresst ist und vor dem Einfüllen eines weiteren der Schüttmaterialien außerhalb der Matrizenkavität angeordnet ist.

15. Vorrichtung (1) nach einem der vorhergehenden Ansprüche, **da-durch gekennzeichnet, dass** eine Analysevorrichtung zum Analysieren der Materialien vor dem Auffüllen der Kammern vorgesehen ist mit

- Mitteln zum Entnehmen einer Materialprobe von jeder der Materialien (6, 7, 8, 9, 10);
- Mitteln zum Zuführen der Materialproben zu den Mitteln zum Messen der Schüttdichte;
- Mitteln zum Bilden eines Streumaßes aus den mit den Mitteln zum Messen der Schüttdichte gemessenen Schüttdichten und zum Vergleichen des Streumaßes mit einem Grenzwert;

und
- Mitteln zur Ausgabe eines Kontrollsignals derart, dass anhand des Kontrollsignals feststellbar ist, ob der Grenzwert eingehalten wird.

Fig. 1

Fig. 2

Fig. 3

38

Fig. 4

39

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19714178 A1